# FASCICULE DE BREVET EUROPEEN

(11) **EP 2 804 840 B1**
(45) Date de publication et mention de la délivrance du brevet: **06.04.2016**
(21) Numéro de dépôt: 13704172.9
(22) Date de dépôt: 17.01.2013
(51) Int. Cl.: C03C 3/091, C03C 3/097, C03C 13/06, C03C 25/26, C03C 25/32

(54) **COMPOSITION D'ENCOLLAGE POUR FIBRES, NOTAMMENT MINERALES, A BASE D'ACIDE HUMIQUE ET/OU FULVIQUE, ET PRODUITS ISOLANTS RESULTANTS**
SCHLICHTUNGSZUSAMMENSETZUNG FÜR FASERN, INSBESONDERE MINERALFASERN, AUF DER BASIS VON HUMIN- UND/ODER FULVINSÄURE UND RESULTIERENDE ISOLIERPRODUKTE
SIZING COMPOSITION FOR FIBRES, IN PARTICULAR MINERAL FIBRES, BASED ON HUMIC AND/OR FULVIC ACID, AND RESULTING INSULATING PRODUCTS

(30) Priorité: 17.01.2012 FR 1250463
(43) Date de publication de la demande: 26.11.2014
(73) Titulaire: Saint-Gobain Isover, 92400 Courbevoie (FR)
(72) Inventeur: DIDIER, Benoît, 4000 LIEGE (BE)
(74) Mandataire: Jamet, Vincent
(86) Numéro de dépôt international: PCT/FR2013/050109
(87) Numéro de publication internationale: WO 2013/107990

(56) Documents cités:
- FR-A1- 2 935 707
- FR-A1- 2 940 648
- GB-A- 2 451 719
- US-A1- 2007 027 283
- DATABASE WPI Week 198433 Thomson Scientific, London, GB; AN 1984-203848 XP002683388, -& JP 59 116153 A (ASAHI GLASS CO LTD) 4 juillet 1984 (1984-07-04)
- DATABASE WPI Week 197744 Thomson Scientific, London, GB; AN 1977-78935Y XP002683389, -& SU 438 673 A1 (KALININ POLY) 28 janvier 1975 (1975-01-28)

## Description

La présente invention se rapporte au domaine des produits à base de fibres, notamment minérales, liées par un liant exempt de formaldéhyde.

Bien que l'invention décrive tout particulièrement des produits d'isolation, thermiques et/ou acoustique dont les fibres sont sous la forme de laine minérale, notamment de verre ou de roche, elle n'exclut pas pour autant les autres produits à base de fibres, notamment des voiles, des mats, des feutres et des tissus.

L'invention a ainsi pour objet une composition d'encollage apte à réticuler pour former un liant, qui renferme au moins un acide humique et/ou fulvique, au moins un saccharide et au moins un sel d'ammonium d'acide inorganique, le procédé de fabrication de produits à base de fibres et les produits qui en résultent, en particulier des isolants thermiques et/ou acoustiques.

La fabrication de produits d'isolation à base de laine minérale comprend généralement une étape de fabrication de la laine elle-même, qui peut être mise en oeuvre par différents procédés, par exemple selon la technique connue du fibrage par centrifugation interne ou externe.

La centrifugation interne consiste à introduire la matière en fusion (en général du verre ou une roche) dans un dispositif centrifuge comprenant une multitude de petits orifices, la matière étant projetée vers la paroi périphérique du dispositif sous l'action de la force centrifuge et s'en échappant sous la forme de filaments. A la sortie du dispositif centrifuge, les filaments sont étirés et entraînés par un courant gazeux ayant une température et une vitesse élevées vers un organe récepteur pour former une nappe de fibres (ou laine minérale).

La centrifugation externe consiste, elle, à déverser la matière en fusion à la surface périphérique externe d'organes rotatifs appelés rotors, d'où ladite matière est éjectée sous l'action de la force centrifuge. Des moyens d'étirage par courant gazeux et de collecte sur un organe de réception sont également prévus.

Pour assurer l'assemblage des fibres entre elles et permettre à la nappe d'avoir de la cohésion, on applique sur les fibres, sur le trajet allant de la sortie du dispositif centrifuge vers l'organe récepteur, une composition d'encollage contenant une résine thermodurcissable. La nappe de fibres revêtues de l'encollage est soumise à un traitement thermique, à une température généralement supérieure à 100°C, afin d'effectuer la polycondensation de la résine et obtenir ainsi un produit d'isolation thermique et/ou acoustique ayant des propriétés spécifiques, notamment une stabilité dimensionnelle, une résistance à la traction, une reprise d'épaisseur après compression et une couleur homogène.

La composition d'encollage à projeter sur la laine minérale se présente généralement sous la forme d'une solution aqueuse renfermant la résine thermodurcissable et des additifs tels qu'un catalyseur de réticulation de la résine, un silane promoteur d'adhérence, une huile minérale anti-poussières, ... La composition d'encollage est le plus souvent appliquée sur les fibres par pulvérisation.

Les propriétés de la composition d'encollage dépendent en grande partie des caractéristiques de la résine. Du point de vue de l'application, il est nécessaire que la composition d'encollage présente une bonne aptitude à la pulvérisation et puisse se déposer à la surface des fibres afin de les lier efficacement.

La résine doit être stable pendant un laps de temps donné avant d'être utilisée pour former la composition d'encollage, laquelle composition est généralement préparée au moment de l'emploi en mélangeant la résine et les additifs mentionnés précédemment.

Sur le plan réglementaire, il est nécessaire que la résine soit considérée comme non polluante, c'est-à-dire qu'elle contienne - et qu'elle génère lors de l'étape d'encollage ou ultérieurement - le moins possible de composés pouvant nuire à la santé humaine ou à l'environnement.

Les résines thermodurcissables les plus couramment utilisées sont des résines phénoliques appartenant à la famille des résols. Outre leur bonne aptitude à réticuler dans les conditions thermiques précitées, ces résines sont solubles dans l'eau, possèdent une bonne affinité pour les fibres minérales, notamment en verre, et sont relativement peu coûteuses.

Ces résols sont obtenus par condensation de phénol et de formaldéhyde, en présence d'un catalyseur basique, dans un rapport molaire formaldéhyde/phénol supérieur à 1 de manière à favoriser la réaction entre le phénol et le formaldéhyde et à diminuer le taux de phénol résiduel dans la résine. La réaction de condensation entre le phénol et le formaldéhyde est opérée en limitant le degré de condensation des monomères, afin éviter la formation de chaînes longues peu hydrosolubles qui réduisent la diluabilité. En conséquence, la résine contient une certaine proportion de monomère n'ayant pas réagi, en particulier le formaldéhyde dont la présence n'est pas souhaitée à cause de ses effets nocifs avérés.

Pour cette raison, les résines à base de résol sont généralement traitées par de l'urée qui réagit avec le formaldéhyde libre en le piégeant sous forme de condensats urée-formaldéhyde non volatils. La présence d'urée dans la résine apporte en outre un avantage économique certain du fait de son faible coût, car on peut l'introduire en relativement grande quantité sans affecter les qualités d'emploi de la résine, notamment sans nuire aux propriétés mécaniques du produit final, ce qui abaisse notablement le coût total de la résine.

Il a néanmoins été observé que, dans les conditions de températures auxquelles la nappe est soumise pour obtenir la réticulation de la résine, les condensats urée-formaldéhyde ne sont pas stables ; ils se décomposent en redonnant du formaldéhyde et de l'urée (à son tour dégradée au moins partiellement en ammoniaque) qui sont libérés dans l'atmosphère de l'usine.

La réglementation en matière de protection de l'environnement devenant plus contraignante oblige les fabricants de produits d'isolation à rechercher des solutions permettant d'abaisser encore les niveaux d'émissions indésirables, en particulier de formaldéhyde.

Des solutions de remplacement des résols dans les compositions d'encollage sont connues.

Une première solution se fonde sur l'emploi d'un polymère d'acide carboxylique, notamment d'acide acrylique.

Dans US 5 340 868, l'encollage comprend un polymère polycarboxylique, un β-hydroxylamide et un acide carboxylique monomérique au moins trifonctionnel.

D'autres compositions d'encollage ont été proposées qui comprennent un polymère polycarboxylique, un polyol et un catalyseur, lequel catalyseur pouvant être un composé contenant du phosphore (US 5 318 990, US 5 661 213, US 6331 350, US 2003/0008978), un fluoroborate (US 5 977 232) ou bien un cyanamide, un dicyanamide ou une cyanoguanidine (US 5 932 689).

Les compositions d'encollage à base d'un polymère polycarboxylique et d'un polyol peuvent en outre comprendre un tensioactif cationique, amphotère ou non ionique (US 2002/0188055), un agent de couplage de type silane (US 2004/0002567) ou une dextrine en tant que co-liant (US 2005/0215153).

In a aussi été décrit des compositions d'encollage comprenant une alcanolamine renfermant au moins deux groupements hydroxyle et un polymère polycarboxylique (US 6 071 994, US 6 099 773, US 6 146 746) associé à un copolymère (US 6 299 936).

Une deuxième solution de remplacement des résols se fonde sur l'association d'un saccharide et d'un autre composé.

L'autre composé peut être un acide polycarboxylique.

Dans US 5 895 804, il est décrit une composition adhésive à base de polysaccharides thermoréticulables pouvant être utilisée en tant qu'encollage pour de la laine minérale. La composition renferme un polymère polycarboxylique ayant au moins deux groupes fonctionnels acide carboxylique et un poids moléculaire au moins égal à 1000, et un polysaccharide ayant un poids moléculaire au moins égal à 10000.

Dans WO 2009/080938, la composition d'encollage comprend un monosaccharide et/ou un polysaccharide et un acide organique polycarboxylique de masse molaire inférieure à 1000.

On connaît également une composition d'encollage aqueuse sans formaldéhyde qui comprend un produit de réaction de Maillard, en particulier associant un sucre réducteur, un acide carboxylique et de l'ammoniaque (WO 2007/014236). Dans WO 2009/019232 et WO 2009/019235, il est proposé de substituer l'acide carboxylique par un précurseur d'acide dérivé d'un sel inorganique, notamment un sel d'ammonium qui présente l'avantage supplémentaire de pouvoir remplacer tout ou partie de l'ammoniaque.

L'autre composé peut aussi être un agent de réticulation polyfonctionnel qui est associé à un sucre hydrogéné (WO 2010/029266).

Dans WO 2011/045531, l'autre composé est un sel métallique d'acide inorganique et le saccharide est un sucre réducteur.

Il existe un besoin de disposer de compositions d'encollage alternatives, sans formaldéhyde, qui permettent de fabriquer des produits d'isolation acoustique et/ou thermique à partir de fibres minérales de toute nature, notamment de fibres de verre, qui tolèrent difficilement des compositions d'encollage à caractère acide parce celles-ci entraînent une corrosion du verre.

La présente invention a pour but de proposer une composition d'encollage pour fibres, en particulier sous la forme de laine minérale, de verre ou de roche, qui remédie aux inconvénients précités.

La composition d'encollage conforme à l'invention comprend :
- au moins un acide humique et/ou un acide fulvique ou un sel de ces acides,
- au moins un saccharide, et
- au moins un sel d'ammonium d'acide inorganique.

Les acides humiques et les acides fulviques sont des acides complexes qui sont contenus dans les substances humiques en général, qu'elles soient organiques telles que la tourbe ou le compost, ou minéraloïdes et minérales telles que la houille et le lignite, en particulier la léonardite.

Les acides humiques et fulviques sont généralement extraits à partir des substances humiques précitées, par un procédé incluant un traitement au moyen d'une base forte telle que la soude ou la potasse qui permet de solubiliser les deux acides, suivi d'un traitement mettant en oeuvre un acide fort qui conduit à faire précipiter les acides humiques et maintenir les acides fulviques en solution dans l'acide. Un tel procédé d'obtention de ces acides est décrit par exemple dans WO 2009/065018.

Les acides humiques et fulviques peuvent aussi être obtenus à partir d'une composition humique artificielle produite à partir de matières ligno-cellulosique (bois, tiges et rafles de maïs, paille de céréales, ...) selon un procédé de traitement mixte incluant des étapes thermique et mécaniques (WO 2007/031625).

Les acides humiques ont une masse molaire de l'ordre de 300000 g/mol, plus élevée que celle des acides fulviques, qui est de l'ordre de 2000 g/mole. Les acides humiques et fulviques sont composés de noyaux aromatiques portant des substituants phénoliques et carboxyliques, ainsi que des fonctions alcool, aldéhyde et cétone. Du fait de leur longueur de chaîne moléculaire et de leurs nombreuses fonctions réactives, ces acides sont des matières premières avantageuses comme point de départ d'un système adhésif issu de ressources renouvelables.

Les acides humiques et fulviques produits commercialement sont généralement sous la forme de sels de sodium, de potassium, éventuellement d'ammonium. Les sels de ces acides (humates et fulvates) sont solubles dans l'eau.

Le saccharide conforme à la présente invention est un monosaccharide ou un oligosaccharide.

Par « oligosaccharide » on entend tout type de saccharide, réducteur ou non réducteur, renfermant au plus 50 motifs saccharidiques. De préférence, le nombre de motifs saccharidiques est au plus égal à 20, avantageusement au plus égal à 10 afin que la composition d'encollage finale présente une viscosité pas trop élevée lui permettant d'être appliquée correctement sur les fibres minérales.

Le saccharide peut ainsi être choisi parmi les monosaccharides tels que le glucose, le galactose et le mannose, les disaccharides tels que le fructose, le lactose, le maltose, l'isomaltose, le cellobiose, le tréhalose, les isotréhaloses, le saccharose et les isosaccharoses (« isosucroses » en anglais), les trisaccharides tels que le mélézitose, le gentianose, le raffinose, l'erlose et l'umbelliférose, les tétrasaccharides tels que le stachyose, et les pentaholosides tels que le verbascose. Le glucose, le saccharose et le fructose sont préférés.

Le saccharide est présent dans la composition d'encollage à raison de 10 à 95 parts en poids pour 100 parts en poids du mélange d'acide humique et/ou fulvique ou des sels de cet(ces) acide(s), de préférence 20 à 90 parts, et avantageusement 30 à 80 parts.

Le sel d'ammonium d'acide inorganique, sous l'effet de la chaleur, déshydrate au moins partiellement le saccharide qui réagit avec l'acide humique et/ou fulvique ou ses sels pour former un réseau polymérique qui constitue le liant final. Le réseau polymérique ainsi formé permet d'établir des liaisons entre les fibres minérales, en particulier au niveau des points de jonction des fibres dans la laine minérale, ce qui confère au produit final une certaine « élasticité » propre à assurer une bonne reprise en épaisseur après déballage du produit.

Le sel d'ammonium d'acide inorganique est choisi parmi les sulfates d'ammonium, notamment l'hydrogénosulfate d'ammonium NH₄HSO₄ et le sulfate d'ammonium (NH₄)₂SO₄, les phosphates d'ammonium, notamment le phosphate monoammonique NH₄H₂PO₄, le phosphate diammonique (NH₄)₂HPO₄ et le phosphate d'ammonium (NH₄)₃PO₄, les nitrates d'ammonium et les carbonates d'ammonium, notamment le bicarbonate d'ammonium NH₄HCO₃ et le carbonate d'ammonium (NH₄)₂CO₃.

Le sel d'ammonium d'acide inorganique est de préférence choisi parmi les sulfates et les phosphates, avantageusement les sulfates.

Dans la composition d'encollage, le sel d'ammonium d'acide inorganique représente 1 à 30 % en poids du poids total du mélange constitué par l'acide humique et/ou fulvique ou le(s) sel(s) de cet(ces) acide(s) et le saccharide, de préférence 3 à 20 %, avantageusement 3 à 16 % et mieux encore 5 à 15 %.

De manière avantageuse, la composition d'encollage comprend en outre un agent plastifiant, par exemple de l'urée.

La quantité d'urée peut aller jusqu'à 20 % en poids du poids total du mélange constitué par l'acide humique et/ou fulvique ou le(s) sel(s) de cet(ces) acide(s) et le saccharide.

La composition d'encollage peut comprendre en sus des composés mentionnés, les additifs conventionnels ci-après dans les proportions suivantes calculées sur la base de 100 parts en poids du mélange constitué par l'acide humique et/ou fulvique ou le(s) sel(s) de cet(ces) acide(s) et le saccharide :
- 0 à 2 parts de silane, en particulier un aminosilane,
- 0 à 20 parts d'huile, de préférence 4 à 15 parts,
- 0 à 20 parts d'urée, de préférence 0 à 10 parts,
- 0 à 5 parts d'un silicone,
- 0 à 30 parts d'un « extendeur ».

Le rôle des additifs est connu et brièvement rappelé : le silane est un agent de couplage entre les fibres et le liant, qui joue également le rôle d'agent anti-vieillissement ; les huiles sont des agents anti-poussières et hydrophobes ; l'urée joue le rôle de plastifiant et permet d'éviter la prégélification de la composition d'encollage ; le silicone est un agent hydrophobe qui a pour fonction de réduire l'absorption d'eau par le produit, notamment lorsqu'il s'agit d'un produit d'isolation ; l'« extendeur » est une charge organique ou inorganique, soluble ou dispersable dans la composition d'encollage qui permet notamment de diminuer le coût de la composition d'encollage.

La composition d'encollage présente un pH qui varie selon la nature de l'acide humique et/ou fulvique ou des sels de cet(ces) acide(s) et du sel d'ammonium d'acide inorganique utilisé, en général de 7 à 9.

La composition d'encollage selon l'invention est destinée à être appliquée sur des fibres, en particulier minérales, en vue de fabriquer des produits tels que des voiles, des mats, des feutres et tout type de produits isolants thermiques et/ou acoustiques à base de laine minérale, notamment de verre ou de roche. Les produits incorporant de la laine minérale sont particulièrement visés par la présente invention.

Les fibres constituant la laine de verre peuvent être constituées d'un verre de quelque nature que ce soit, en particulier un verre à teneur élevée en alumine, notamment de l'ordre de 15 à 30 % en poids, qui présente une faible résistance à la corrosion par des composés acides. Un tel verre est par exemple décrit dans WO 00/17117, qui comprend les constituants ci-après dans les proportions suivantes, exprimées en pourcentages pondéraux :

| | |
|---|---|
| SiO₂ | 39-55 %, de préférence 40-52 % |
| Al₂O₃ | 16-27 %, de préférence 16-25 % |
| CaO | 3-35 %, de préférence 10-25 % |
| MgO | 0-15 %, de préférence 0-10 % |
| Na₂O | 0-15 %, de préférence 6-12 % |
| K₂O | 0-15 %, de préférence 3-12 % |
| R₂O (Na₂O + K₂O) | 10-17 %, de préférence 12-17 % |
| P₂O₅ | 0-3 %, de préférence 0-2 % |
| Fe₂O₃ | 0-15 %, |
| B₂O₃ | 0-8 %, de préférence 0-4 % |
| TiO₂ | 0-3 %, |

la teneur en MgO étant comprise entre 0 et 5 % lorsque la teneur en R₂O est inférieure ou égale à 13,0 %.

Avantageusement, le verre a la composition décrite dans WO 2005/033032 qui comprend les constituants ci-après dans les proportions suivantes (en % pondéral) :

| | |
|---|---|
| SiO₂ | 39-44 %, de préférence 40-43 % |
| Al₂O₃ | 16-27 %, de préférence 16-26 % |
| CaO | 6-20 %, de préférence 8-18 % |
| MgO | 1-5 %, de préférence 1-4,9 % |
| Na₂O | 0-15 %, de préférence 2-12 % |
| K₂O | 0-15 %, de préférence 2-12 % |
| R₂O (Na₂O + K₂O) | 10-14,7 %, de préférence 10-13,5 % |
| P₂O₅ | 0-3 %, notamment 0-2 % |
| Fe₂O₃ | 1,5-15 %, notamment 3,2-8 % |
| B₂O₃ | 0-2 %, de préférence 0-1 % |
| TiO₂ | 0-2 %, de préférence 0,4-1 %. |

D'autres compositions de verre à teneur élevée en alumine destinées à la fabrication de fibres sont décrites dans WO 99/57073, WO 99/56525 et WO 2006/103376.

Des compositions utiles pour l'élaboration de fibres de roche, également à teneur élevée en alumine, sont décrites notamment dans WO 96/14274, qui comprennent préférentiellement les constituants ci-après dans les proportions suivantes, exprimées en pourcentages pondéraux :

| | |
|---|---|
| SiO₂ | 32-48 % |
| Al₂O₃ | 10-30 % |
| CaO | 10-30 % |
| MgO | 2-20 % |
| FeO | 2-15 %, |
| Na₂O + K₂O | 0-12 % |
| TiO₂ | 0-6 % |
| Autres éléments | 0-15 %. |

De manière classique, la composition d'encollage est appliquée sur les fibres minérales à la sortie du dispositif de fibrage et avant leur collecte sur l'organe récepteur sous la forme d'une nappe de fibres qui est ensuite traitée à une température permettant la réticulation de l'encollage et la formation d'un liant infusible. La réticulation de l'encollage selon l'invention se fait à une température de l'ordre de 100 à 200°C, généralement à une température comparable à celle d'une résine formophénolique classique, notamment supérieure ou égale à 110°C, de préférence inférieure ou égale à 170°C.

Les produits obtenus par encollage des fibres, notamment minérales, à l'aide de la composition d'encollage précitée constituent aussi un objet de la présente invention.

Ces produits peuvent être des voiles (aussi appelés « non-tissés » ou « intissés »), des mats, des feutres ou des tissus enduits ou imprégnés, en particulier à base de fibres minérales telles que des fibres de verre ou de roche.

Les voiles de fibres minérales trouvent leur usage notamment en tant que revêtement de surface de produits d'isolation thermique et/ou acoustique à base de laine minérale ou d'une mousse.

Comme déjà mentionné, les produits isolants acoustiques et/ou thermiques composés de laine minérale sont particulièrement visés par la présente invention.

Ces produits d'isolation thermique et/ou acoustique se présentent généralement sous la forme d'un matelas, d'un feutre, de panneaux, de blocs, de coquilles ou autres formes moulées à base de laine minérale, de verre ou de roche.

L'invention a encore pour objet un procédé de fabrication d'un produit isolant thermique et/ou acoustique à base de laine minérale selon lequel on fabrique la laine minérale, on applique sur ladite laine la composition d'encollage selon l'invention et on traite ladite laine à une température permettant la réticulation de l'encollage et la formation d'un liant infusible, par exemple dans les conditions thermiques décrites précédemment.

L'application de la composition d'encollage peut être effectuée par tout moyen approprié, par exemple par projection, pulvérisation, atomisation, enduction ou imprégnation, et préférentiellement par pulvérisation.

Les exemples qui suivent permettent d'illustrer l'invention sans toutefois la limiter.

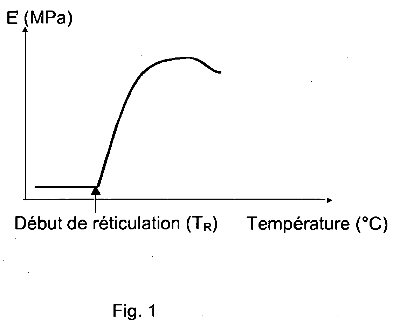

Dans ces exemples, on mesure :
- la température de début de réticulation (T_{R}) par la méthode Dynamic Mechanical Analysis (DMA) qui permet de caractériser le comportement viscoélastique d'un matériau polymérique. On procède comme suit : un échantillon de papier Whatmann est imprégné de la composition d'encollage (teneur en matières solides organiques de l'ordre de 30 %) puis est fixé horizontalement entre deux mors. Un élément oscillant muni d'un dispositif de mesure de la contrainte en fonction de la déformation appliquée est disposé sur la face supérieure de l'échantillon. Le dispositif permet de calculer le module d'élasticité E'. L'échantillon est chauffé à une température variant de 20 à 250°C à la vitesse de 4°C/min. A partir des mesures, on établit la courbe de variation du module d'élasticité E' (en MPa) en fonction de la température (en °C) dont l'allure générale est donnée dans la Figure 1. On détermine sur la courbe la valeur de température, en °C, de début de réticulation (T_{R}),
- la résistance en traction selon la norme ASTM C 686-71T sur un échantillon découpé par estampage dans le produit isolant. L'échantillon a la forme d'un tore de 122 mm de longueur, 46 mm de largeur, un rayon de courbure de la découpe du bord extérieur égal à 38 mm et un rayon de courbure de la découpe du bord intérieur égal à 12,5 mm.

L'échantillon est disposé entre deux mandrins cylindriques d'une machine d'essais dont l'un est mobile et se déplace à vitesse constante. On mesure la force de rupture (en Newton) de l'échantillon et on calcule la résistance en traction RT définie par le rapport de la force de rupture F à la masse de l'échantillon (en N/g).

La résistance en traction est mesurée après la fabrication (résistance en traction initiale) et après un vieillissement accéléré dans un autoclave à une température de 105°C sous 100 % d'humidité relative pendant 15 minutes (RT15).
- la perte au feu en soumettant l'échantillon à une température de 500°C jusqu'à ce que la masse de l'échantillon ne varie plus. La perte au feu (en %) est calculée selon la formule : 100 x (masse initiale - masse après traitement)/masse initiale.

### EXEMPLES 1 A 17

On prépare des compositions d'encollage comprenant les constituants figurant dans le tableau 1, les quantités étant exprimées en parts pondérales.

Ces compositions sont préparées en introduisant les constituants dans un récipient contenant de l'eau sous agitation jusqu'à dissolution complète des constituants.

Les compositions d'encollage présentent une teneur en matières solides (extrait sec) égal à 30 %.

La température de début de réticulation (T_{R}) des exemples 1 à 17 est au plus égale à 167°C, température qui reste compatible avec les conditions de fabrication de produits d'isolation thermique et/ou acoustique à base de laine minérale.

La température de début de réticulation est quasi-identique quelle que soit la nature du sel (K ou Na) d'acide humique utilisé (exemples 2, 3, 5, 6 et 8 comparés aux exemples 9, 10, 12, 13 et 15, respectivement). Les exemples 16 et 17 contenant un mélange d'acide humique et d'acide fulvique présentent une température de début de réticulation également comparable aux exemples précités.

Les exemples 2 et 9 qui renferment du sulfate d'ammonium sont préférés car ils présentent une température de début de réticulation inférieure à celle des exemples à 3 et 10 contenant du phosphate diammonique.

### EXEMPLES 18 A 20

Ces exemples illustrent la fabrication de produits isolants sur une ligne à échelle industrielle.

On utilise les compositions d'encollage comprenant les constituants figurant dans le tableau 2, dans des quantités exprimées en parts pondérales, pour former des produits à base de laine minérale présentant une densité nominale égale à 10,6 kg/m³ et une épaisseur nominale égale à 144 mm. A titre de comparaison, on utilise également une composition d'encollage contenant un pré-mélange renfermant 80 parts en poids d'une résine phénol-formaldéhyde-monoéthanolamine (exemple 1 de WO 2008/043960) et 20 parts en poids d'urée, et les additifs mentionnés dans le tableau 2 (Référence 1).

On fabrique de la laine de verre sur une ligne pilote par la technique de la centrifugation interne dans laquelle la composition de verre fondu est transformée en fibres au moyen d'un outil dénommé assiette de centrifugation, comprenant un panier formant chambre de réception de la composition fondue et une bande périphérique percée d'une multitude d'orifices : l'assiette est mue en rotation autour de son axe de symétrie disposé verticalement, la composition est éjectée à travers les orifices sous l'effet de la force centrifuge et la matière s'échappant des orifices est étirée en fibres avec l'assistance d'un courant de gaz d'étirage.

De façon classique, une couronne de pulvérisation d'encollage est disposée au-dessous de l'assiette de fibrage de façon à répartir régulièrement la composition d'encollage sur la laine de verre venant d'être formée.

La laine minérale ainsi encollée est collectée sur un convoyeur à bande équipé de caissons d'aspiration internes qui retiennent la laine minérale sous forme d'une nappe à la surface du convoyeur. La nappe est placée dans une étuve à 230°C pendant 10 minutes.

Le verre contient les constituants ci-après dans les proportions suivantes exprimées en % en poids :

| | |
|---|---|
| SiO₂ | 65,40 |
| Al₂O₃ | 2,05 |
| CaO | 8,05 |
| MgO | 2,55 |
| Na₂O | 16,80 |
| K₂O | 0,23 |
| B₂O₃ | 4,65 |
| Autres (Fe₂O₃, ZrO₂, Cr₂O₃, TiO₂, MnO) | 0,27 |

Les propriétés des produits d'isolation obtenus sont données dans le tableau 2.

### EXEMPLES 21 A 23

On procède dans les conditions des exemples 18 à 20, modifiées en ce que l'on utilise les compositions d'encollage telles de définies dans le tableau 3 et un verre à haute teneur en alumine.

La composition d'encollage utilisée à titre de comparaison (Référence 2) contient un prémélange renfermant 60 parts en poids d'une résine phénol-formaldéhyde (exemple 2 de WO 01/96254) et 40 parts en poids d'urée, et les additifs mentionnés dans le tableau 3.

Le verre contient les constituants ci-après dans les proportions suivantes exprimées en % en poids :

| | |
|---|---|
| SiO₂ | 41,50 |
| Al₂O₃ | 23,30 |
| CaO | 14,10 |
| MgO | 2,00 |
| BaO | 0,30 |
| SrO | 0,38 |
| Na₂O | 5,50 |
| K₂O | 5,40 |
| MnO | 0,20 |
| Fe₂O₃ | 5,35 |
| TiO₂ | 0,70 |
| P₂O₅ | 0,80 |

Les propriétés des produits d'isolation obtenus sont données dans le tableau 3.

### EXEMPLES 24 ET 25

Ces exemples illustrent la fabrication de produits isolants sur une ligne industrielle.

On utilise les compositions d'encollage comprenant les constituants figurant dans le tableau 4, dans des quantités exprimées en parts pondérales, pour former des produits à base de laine minérale. A titre de comparaison, on utilise également une composition d'encollage contenant un pré-mélange renfermant 80 parts en poids d'une résine phénol-formaldéhyde-monoéthanolamine (exemple 1 de WO 2008/043960) et 20 parts en poids d'urée, et les additifs mentionnés dans le tableau 4 (Référence 1).

On fabrique de la laine de verre sur une ligne industrielle de 2,4 m de large par la technique de la centrifugation interne en utilisant un verre ayant la composition donnée dans les exemples 18 à 20.

De façon classique, la composition de verre fondu est transformée en fibres au moyen d'un outil dénommé assiette de centrifugation, comprenant un panier formant chambre de réception de la composition fondue et une bande périphérique percée d'une multitude d'orifices : l'assiette est mue en rotation autour de son axe de symétrie disposé verticalement, la composition est éjectée à travers les orifices sous l'effet de la force centrifuge et la matière s'échappant des orifices est étirée en fibres avec l'assistance d'un courant de gaz d'étirage.

Une couronne de pulvérisation d'encollage est disposée au-dessous de l'assiette de fibrage de façon à répartir régulièrement la composition d'encollage sur la laine de verre venant d'être formée.

La laine minérale ainsi encollée est collectée sur un convoyeur à bande équipé de caissons d'aspiration internes qui retiennent la laine minérale sous forme d'un feutre ou d'une nappe à la surface du convoyeur. Le convoyeur circule ensuite dans une étuve maintenue à 250°C où les constituants de l'encollage polymérisent pour former un liant. Le produit obtenu possède une densité nominale égale à 17,5 kg/m³ et une épaisseur nominale égale à 75 mm.

Les propriétés des produits d'isolation obtenus sont données dans le tableau 4.

**Tableau 1**

| Exemple | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|
| **Composition d'encollage** | | | | | | | | | | | | | | | | | |
| Humin®-P 775⁽¹⁾ | 40 | 40 | 40 | 50 | 40 | 20 | 80 | 20 | - | - | - | - | - | - | - | - | - |
| Humin®-S 775⁽²⁾ | - | - | - | - | - | - | - | - | 40 | 40 | 50 | 40 | 20 | 40 | 20 | - | - |
| SHB Hydro Nectar⁽³⁾ | - | - | - | - | - | - | - | - | - | - | - | - | - | - | - | 40 | 20 |
| Glucose | 60 | 60 | 60 | - | - | - | - | - | 60 | 60 | - | - | - | - | - | - | - |
| Saccharose | - | - | - | 50 | 60 | 80 | - | - | - | - | 50 | 60 | 80 | - | - | 60 | 80 |
| Fructose | - | - | - | - | - | - | 20 | 80 | - | - | - | - | - | 60 | 80 | - | - |
| Sulfate d'ammonium | 10 | 10 | - | 7,5 | 10 | - | 10 | 15 | 10 | - | 10 | 10 | - | 10 | 15 | 10 | 15 |
| Phosphate diammonique | - | - | 10 | - | - | 15 | - | - | - | 10 | - | - | 15 | - | - | - | - |
| Urée | - | 10 | 10 | - | 8 | 5 | 20 | 10 | 10 | 10 | 10 | 8 | 5 | 10 | 10 | 10 | 5 |

| **Propriétés** | | | | | | | | | | | | | | | | | |
|---|---|---|---|---|---|---|---|---|---|---|---|---|---|---|---|---|---|
| Temp. début rétic.T_{R}(°C) | 130 | 132 | 144 | 150 | 160 | 156 | 156 | 131 | 126 | 145 | 162 | 167 | 163 | 144 | 135 | 153 | 146 |
| pH⁽⁴⁾ | 8,2 | 8,2 | 8,4 | 8,4 | 8,6 | 8,3 | 8,4 | 7,3 | 8,7 | 8,7 | 9,0 | 8,6 | 8,6 | 8,0 | 7,6 | 8,5 | 8,3 |

| | | | | | | | | | | | | | | | | | |
|---|---|---|---|---|---|---|---|---|---|---|---|---|---|---|---|---|---|
| ⁽¹⁾ commercialisé par la société Humintech ; Humate de potassium ; poudre 100 % hydrosoluble ⁽²⁾ commercialisé par la société Humintech ; Humate de sodium ; granulés 100 % hydrosolubles ⁽³⁾ commercialisé par la société Boisvalor ; mélange d'acide humique (55 % en poids) et d'acide fulvique (45 % en poids) ; liquide ⁽⁴⁾ teneur en matières solides : 30 % | | | | | | | | | | | | | | | | | |

**Tableau 2**

| Exemple | 18 | 19 | 20 | Ref. 1 |
|---|---|---|---|---|
| **Composition d'encollage** | | | | |
| Humin®-P 775⁽¹⁾ | 40 | - | - | - |
| Humin®-S 775⁽²⁾ | - | 40 | 20 | - |
| Saccharose | 60 | 60 | 80 | - |
| Sulfate d'ammonium | 10 | 10 | 15 | - |
| Urée | 10 | - | 5 | - |
| γ-aminopropyltriéthoxysilane | 1 | 1 | 1 | 0,5 |
| huile minérale | 9 | 9 | 9 | 9 |

| **Propriétés du produit** | | | | |
|---|---|---|---|---|
| Résistance en traction (N/g) | | | | |
| - Initiale | 1,2 | 1,1 | 1,3 | 3,1 |
| - Après vieillissement (RT15) | 1,3 | 1,2 | 1,5 | 2,9 |
| Perte au feu (%) | 3,2 | 4,0 | 3,8 | 5,1 |

| | | | | |
|---|---|---|---|---|
| ⁽¹⁾ commercialisé par la société Humintech ; Humate de potassium ; poudre 100 % hydrosoluble ⁽²⁾ commercialisé par la société Humintech ; Humate de sodium ; granulés 100 % hydrosolubles | | | | |

**Tableau 3**

| Exemple | 21 | 22 | 23 | Ref. 2 |
|---|---|---|---|---|
| **Composition d'encollage** | | | | |
| Humin®-S 775⁽²⁾ | 10 | 10 | 10 | - |
| Saccharose | 90 | - | - | - |
| Glucose | - | 90 | - | - |
| Roclys® C 3072 S⁽⁵⁾ | - | - | 90 | - |
| Sulfate d'ammonium | 14 | 14 | 14 | - |
| Urée | 2 | 2 | 2 | - |
| γ-aminopropyltriéthoxysilane | 0,5 | 0,5 | 0,5 | 0,5 |
| huile minérale | 9 | 9 | 9 | 9 |

| **Propriétés du produit** | | | | |
|---|---|---|---|---|
| Résistance en traction (N/g) | | | | |
| - Initiale | 1,6 | 2,1 | 1,1 | 3,3 |
| - Après vieillissement (RT15) | 1,1 | 1,4 | 1,1 | 2,7 |
| Perte au feu (%) | 4,5 | 3,7 | 5,0 | 4,5 |

| | | | | |
|---|---|---|---|---|
| ⁽¹⁾ commercialisé par la société Humintech ; Humate de potassium ; poudre 100 % hydrosoluble ⁽²⁾ commercialisé par la société Humintech ; Humate de sodium ; granulés 100 % hydrosolubles ⁽⁵⁾ commercialisé par la société Roquette ; dextrines d'amidon de maïs ; Equivalent dextrose (DE) : 30 | | | | |

**Tableau 4**

| Exemple | 24 | 25 | Réf. 1 |
|---|---|---|---|
| **Composition d'encollage** | | | |
| SHB 105⁽⁶⁾ | 22,7 | 11,6 | - |
| Saccharose | 77,3 | 88,4 | - |
| Sulfate d'ammonium | 13,6 | 15,6 | - |
| γ-aminopropyltriéthoxysilane | 0,5 | 0,5 | 0,5 |
| huile minérale | 9,5 | 9,5 | 9,5 |

| **Propriétés du produit** | | | |
|---|---|---|---|
| Résistance en traction (N/g) | | | |
| - Initiale | 2,8 | 3,5 | 4,5 |
| - Après vieillissement (RT15) | 2,7 | 3,4 | 4,4 |
| Perte au feu (%) | 4,4 | 5,0 | 4,4 |

| | | | |
|---|---|---|---|
| ⁽⁶⁾ commercialisé par la société Boisvaloir ; mélange d'acide humique (55 % en poids) et d'acide fulvique (45 % en poids) ; liquide | | | |

## Revendications

1. Composition d'encollage exempte de formaldéhyde, pour fibres, notamment sous la forme de laine minérale, en particulier de verre ou de roche, **caractérisée en ce qu**'elle comprend
- au moins un acide humique et/ou un acide fulvique ou un sel de ces acides,
- au moins un saccharide, et
- au moins un sel d'ammonium d'acide inorganique.

2. Composition selon la revendication 1, **caractérisée en ce que** l'acide humique et/ou fulvique est sous la forme d'un sel de potassium, de sodium ou d'ammonium, de préférence de potassium ou de sodium.

3. Composition selon la revendication 1 ou 2, **caractérisée en ce que** le saccharide est un monosaccharide ou un oligosaccharide renfermant au plus 50 motifs saccharidiques, de préférence au plus 20 et avantageusement au plus 10.

4. Composition selon la revendication 3, **caractérisée en ce que** le saccharide est choisi parmi les monosaccharides tels que le glucose, le galactose et le mannose, les disaccharides tels que le fructose, le lactose, le maltose, l'isomaltose, le cellobiose, le tréhalose, les isotréhaloses, le saccharose et les isosaccharoses, les trisaccharides tels que le mélézitose, le gentianose, le raffinose, l'erlose et l'umbelliférose, les tétrasaccharides tels que le stachyose, et les pentaholosides tels que le verbascose.

5. Composition selon l'une des revendications 1 à 4, **caractérisée en ce que le** saccharide est présent à raison de 10 à 95 parts en poids pour 100 parts en poids du mélange d'acide humique et/ou fulvique ou des sels de cet(ces) acide(s), de préférence 20 à 90 parts, et avantageusement 30 à 80.

6. Composition selon l'une des revendications 1 à 5, **caractérisée en ce que** le sel d'ammonium d'acide inorganique est un sulfate d'ammonium, un phosphate d'ammonium, un nitrate d'ammonium ou un carbonate d'ammonium, de préférence un sulfate ou un phosphate d'ammonium.

7. Composition selon la revendication 6, **caractérisée en ce que** le sel d'ammonium d'acide inorganique est un sulfate d'ammonium.

8. Composition selon l'une des revendications 1 à 7, **caractérisée en ce que** le sel d'ammonium d'acide inorganique représente 1 à 30 % en poids du poids total du mélange constitué par l'acide humique et/ou fulvique ou le(s) sel(s) de cet(ces) acide(s) et le saccharide, de préférence 3 à 20 %, avantageusement 3 à 16 % et mieux encore 5 à 15 %.

9. Composition selon l'une des revendications 1 à 8, **caractérisée en ce qu'**elle comprend en outre les additifs ci-après dans les proportions suivantes calculées sur la base de 100 parts en poids du mélange constitué par l'acide humique et/ou fulvique ou le(s) sel(s) de cet(ces) acide(s) et le saccharide :
- 0 à 2 parts de silane, en particulier un aminosilane,
- 0 à 20 parts d'huile, de préférence 4 à 15 parts,
- 0 à 20 parts d'urée, de préférence 0 à 10 parts,
- 0 à 5 parts d'un silicone,
- 0 à 30 parts d'un « extendeur ».

10. Composition selon l'une des revendications 1 à 9, **caractérisée en ce qu'**elle présente un pH qui varie de 7 à 9.

11. Produit à base de fibres, notamment minérales, en particulier de verre ou de roche, encollées à l'aide de la composition d'encollage selon l'une des revendications 1 à 10.

12. Produit selon la revendication 11, **caractérisé en ce qu'**il s'agit d'un produit d'isolation thermique et/ou acoustique dont les fibres sont sous la forme de laine minérale, notamment de verre ou de roche.

13. Produit selon la revendication 12, **caractérisé en ce que** les fibres sont constituées d'un verre qui comprend les constituants ci-après dans les proportions suivantes, exprimées en pourcentages pondéraux :
| | |
|---|---|
| SiO₂ | 39-55 %, de préférence 40-52 % |
| Al₂O₃ | 16-27 %, de préférence 16-25 % |
| CaO | 3-35 %, de préférence 10-25 % |
| MgO | 0-15 %, de préférence 0-10 % |
| Na₂O | 0-15 %, de préférence 6-12 % |
| K₂O | 0-15 %, de préférence 3-12 % |
| R₂O (Na₂O + K₂O) | 10-17 %, de préférence 12-17 % |
| P₂O₅ | 0-3 %, de préférence 0-2 % |
| Fe₂O₃ | 0-15 %, |
| B₂O₃ | 0-8 %, de préférence 0-4 % |
| TiO₂ | 0-3 %, |
la teneur en MgO étant comprise entre 0 et 5 % lorsque la teneur en R₂O est inférieure ou égale à 13,0 %.

14. Produit selon la revendication 13, **caractérisé en ce que** le verre comprend les constituants ci-après dans les proportions suivantes (en % pondéral) :
| | |
|---|---|
| SiO₂ | 39-44 %, de préférence 40-43 % |
| Al₂O₃ | 16-27 %, de préférence 16-26 % |
| CaO | 6-20 %, de préférence 8-18 % |
| MgO | 1-5 %, de préférence 1-4,9 % |
| Na₂O | 0-15 %, de préférence 2-12 % |
| K₂O | 0-15 %, de préférence 2-12 % |
| R₂O (Na₂O + K₂O) | 10-14,7 %, de préférence 10-13,5 % |
| P₂O₅ | 0-3 %, notamment 0-2 % |
| Fe₂O₃ | 1,5-15 %, notamment 3,2-8 % |
| B₂O₃ | 0-2 %, de préférence 0-1 % |
| TiO₂ | 0-2 %, de préférence 0,4-1 %. |

15. Procédé de fabrication d'un produit isolant acoustique et/ou thermique selon l'une des revendications 12 à 14, selon lequel on fabrique la laine minérale, on applique sur ladite laine une composition d'encollage et on traite ladite laine à une température permettant la réticulation de l'encollage et la formation d'un liant infusible, **caractérisé en ce qu**'on utilise la composition d'encollage selon l'une des revendications 1 à 10.

## Patentansprüche

1. Formaldehydfreie Schlichtezusammensetzung für Fasern, insbesondere in der Form von Mineralwolle, im Speziellen Glaswolle oder Steinwolle, **dadurch gekennzeichnet, dass** sie umfasst
- mindestens eine Huminsäure und/oder eine Fulvinsäure oder ein Salz dieser Säuren,
- mindestens ein Saccharid und
- mindestens ein anorganisches Säureammoniumsalz.

2. Zusammensetzung nach Anspruch 1, **dadurch gekennzeichnet, dass** die Huminsäure und/oder Fulvinsäure in der Form eines Kalium-, Natrium- oder Ammoniumsalzes, vorzugsweise eines Kaliumsalzes oder eines Natriumsalzes vorliegt.

3. Zusammensetzung nach Anspruch 1 oder 2, **dadurch gekennzeichnet, dass** das Saccharid ein Monosaccharid oder ein Oligosaccharid ist, das höchstens 50 Saccharideinheiten, vorzugsweise höchstens 20 Saccharideinheiten und besonders bevorzugt höchstens 10 Saccharideinheiten einschließt.

4. Zusammensetzung nach Anspruch 3, **dadurch gekennzeichnet, dass** das Saccharid ausgewählt ist aus Monosacchariden wie Glucose, Galaktose und Mannose, Disacchariden wie Fructose, Lactose, Maltose, Isomaltose, Cellobiose, Trehalose, Isotrehalosen, Saccharose und Isosaccharosen, Trisacchariden wie Melezitose, Gentianose, Raffinose, Erlose und Umbelliferose, Tetrasacchariden wie Stachyose und Pentasacchariden wie Verbascose.

5. Zusammensetzung nach einem der Ansprüche 1 bis 4, **dadurch gekennzeichnet, dass** das Saccharid in einem Anteil von 10 bis 95, vorzugsweise 20 bis 90 und besonders bevorzugt 30 bis 80 Gewichtsteile pro 100 Gewichtsteile der Mischung der Huminsäure und/oder Fulvinsäure oder Salze dieser Säuren vorhanden ist.

6. Zusammensetzung nach einem der Ansprüche 1 bis 5, **dadurch gekennzeichnet, dass** das anorganische Säureammoniumsalz ein Ammoniumsulfat, ein Ammoniumphosphat, ein Ammoniumnitrat oder ein Ammoniumcarbonat, vorzugsweise ein Ammoniumsulfat oder ein Ammoniumphosphat ist.

7. Zusammensetzung nach Anspruch 6, **dadurch gekennzeichnet, dass** das anorganische Säureammoniumsalz ein Ammoniumsulfat ist.

8. Zusammensetzung nach einem der Ansprüche 1 bis 7, **dadurch gekennzeichnet, dass** das anorganische Säureammoniumsalz 1 bis 30, vorzugsweise 3 bis 20, weiter bevorzugt 3 bis 16 und besonders bevorzugt 5 bis 15 Gewichtsprozent des Gesamtgewichts der Mischung bestehend aus der Huminsäure und/oder Fulvinsäure oder dem Salz dieser Säuren und dem Saccharid ausmacht.

9. Zusammensetzung nach einem der Ansprüche 1 bis 8, **dadurch gekennzeichnet, dass** sie zusätzlich die nachfolgenden Additive in den folgenden Anteilen umfasst, berechnet auf Basis von 100 Gewichtsteilen der Mischung bestehend aus der Huminsäure und/oder Fulvinsäure oder dem Salz dieser Säuren und dem Saccharid:
- 0 bis 2 Teile eines Silans, insbesondere eines Aminosilans,
- 0 bis 20 Teile, vorzugsweise 4 bis 15 Teile eines Öls,
- 0 bis 20 Teile, vorzugsweise 0 bis 10 Teile an Harnstoff,
- 0 bis 5 Teile eines Silikons,
- 0 bis 30 Teile eines Extenders.

10. Zusammensetzung nach einem der Ansprüche 1 bis 9, **dadurch gekennzeichnet, dass** sie einen pH aufweist, der von 7 bis 9 variiert.

11. Faserprodukt, insbesondere auf Basis von Mineralfasern, im Speziellen Glasfasern oder Steinwolle, das mittels der Schlichtezusammensetzung gemäß einem der Ansprüche 1 bis 10 gebunden ist.

12. Produkt nach Anspruch 11, **dadurch gekennzeichnet, dass** es ein Wärmedämmprodukt und/oder ein Schalldämmprodukt ist, dessen Fasern in der Form von Mineralwolle, insbesondere Glaswolle oder Steinwolle, vorliegt.

13. Produkt nach Anspruch 12, **dadurch gekennzeichnet, dass** die Fasern aus einem Glas bestehen, das die nachfolgenden Komponenten in den folgenden Anteilen umfasst, ausgedrückt in Gewichtsprozent:
| | |
|---|---|
| - SiO₂ | 39 - 55 %, vorzugsweise 40 - 52 %, |
| - Al₂O₃ | 16 - 27 %, vorzugsweise 16 - 25 %, |
| - CaO | 3 - 35 %, vorzugsweise 10 - 25 %, |
| - MgO | 0 - 15 %, vorzugsweise 0 - 10 %, |
| - Na₂O | 0 - 15 %, vorzugsweise 6 - 12 %, |
| - K₂O | 0 - 15 %, vorzugsweise 3 - 12 %, |
| - R₂O(Na₂O + K₂O) | 10 - 17 %, vorzugsweise 12 - 17 %, |
| - P₂O₅ | 0 - 3 %, vorzugsweise 0 - 2 %, |
| - Fe₂O₃ | 0 - 15 %, |
| - B₂O₃ | 0 - 8 %, vorzugsweise 0 - 4 %, |
| - Ti₂O | 0 - 3 %, |
wobei der Gehalt an MgO zwischen 0 und 5 % liegt, wenn der Gehalt an R₂O kleiner oder gleich 13,0 % ist.

14. Produkt nach Anspruch 13, **dadurch gekennzeichnet, dass** das Glas die nachfolgenden Komponenten in den folgenden Anteilen umfasst (in Gewichtsprozent):
| | |
|---|---|
| - SiO₂ | 39 - 44 %, vorzugsweise 40 - 43 %, |
| - Al₂O₃ | 16 - 27 %, vorzugsweise 16 - 26 %, |
| - CaO | 6 - 20 %, vorzugsweise 8 - 18 %, |
| - MgO | 1 - 5 %, vorzugsweise 1 - 4,9 %, |
| - Na₂O | 0 - 15 %, vorzugsweise 2 - 12 %, |
| - K₂O | 0 - 15 %, vorzugsweise 2 - 12 %, |
| - R₂O (Na₂O + K₂O) | 10 - 14,7 %, vorzugsweise 10 - 13,5 %, |
| - P₂O₅ | 0 - 3 %, vorzugsweise 0 - 2 %, |
| - Fe₂O₃ | 1,5 - 15 %, vorzugsweise 3,2 - 8 % |
| - B₂O₃ | 0 - 2 %, vorzugsweise 0 - 1 %, |
| - Ti₂O | 0 - 2 %, vorzugsweise 0,4 - 1 % |

15. Verfahren zur Herstellung eines Schalldämmprodukts und/oder eines Wärmedämmprodukts gemäß einem der Ansprüche 12 bis 14, gemäß dem die Mineralwolle hergestellt wird, wobei das Verfahren das Aufbringen einer Schlichtezusammensetzung auf die Wolle und das Behandeln der Wolle bei einer Temperatur, die das Vernetzen der Schlichte und die Bildung eines nicht schmelzbaren Bindemittels ermöglicht, umfasst, **dadurch gekennzeichnet, dass** die Schlichtezusammensetzung gemäß einem der Ansprüche 1 bis 10 verwendet wird.

## Claims

1. A formaldehyde-free sizing composition for fibers, in particular in the form of mineral wool, especially of glass or of rock, **characterized in that** it comprises
- at least one humic acid and/or one fulvic acid or a salt of these acids,
- at least one saccharide, and
- at least one inorganic acid ammonium salt.

2. The composition as claimed in claim 1, **characterized in that** the humic and/or fulvic acid is in the form of a potassium, sodium or ammonium salt, preferably a potassium or sodium salt.

3. The composition as claimed in claim 1 or 2, **characterized in that** the saccharide is a monosaccharide or an oligosaccharide including at most 50 saccharide units, preferably at most 20 and advantageously at most 10.

4. The composition as claimed in claim 3, **characterized in that** the saccharide is chosen from monosaccharides, such as glucose, galactose and mannose, disaccharides, such as fructose, lactose, maltose, isomaltose, cellobiose, trehalose, isotrehaloses, sucrose and isosucroses, trisaccharides, such as melezitose, gentianose, raffinose, erlose and umbelliferose, tetrasaccharides, such as stachyose, and pentasaccharides, such as verbascose.

5. The composition as claimed in one of claims 1 to 4, **characterized in that** the saccharide is present in a proportion of 10 to 95 parts by weight per 100 parts by weight of the mixture of humic and/or fulvic acid or of the salts of this(these) acid(s), preferably of 20 to 90 parts and advantageously of 30 to 80.

6. The composition as claimed in one of claims 1 to 5, **characterized in that** the inorganic acid ammonium salt is an ammonium sulfate, an ammonium phosphate, an ammonium nitrate or an ammonium carbonate, preferably an ammonium sulfate or an ammonium phosphate.

7. The composition as claimed in claim 6, **characterized in that** the inorganic acid ammonium salt is an ammonium sulfate.

8. The composition as claimed in one of claims 1 to 7, **characterized in that** the inorganic acid ammonium salt represents from 1 to 30% by weight of the total weight of the mixture consisting of humic and/or fulvic acid or the salt(s) of this(these) acid(s) and the saccharide, preferably from 3 to 20%, advantageously from 3 to 16% and better still from 5 to 15%.

9. The composition as claimed in one of claims 1 to 8, **characterized in that** it additionally comprises the additives below in the following proportions, calculated on the basis of 100 parts by weight of a mixture consisting of the humic and/or fulvic acid or the salt(s) of this(these) acid(s) and the saccharide:
- from 0 to 2 parts of silane, in particular of aminosilane,
- from 0 to 20 parts of oil, preferably from 4 to 15 parts,
- from 0 to 20 parts of urea, preferably from 0 to 10 parts,
- from 0 to 5 parts of a silicone,
- from 0 to 30 parts of an "extender".

10. The composition as claimed in one of claims 1 to 9, **characterized in that** it exhibits a pH which varies from 7 to 9.

11. A product based on fibers, in particular mineral fibers, especially of glass or of rock, sized using the sizing composition as claimed in one of claims 1 to 10.

12. The product as claimed in claim 11, **characterized in that** it is a thermal and/or acoustic insulating product, the fibers of which are in the form of mineral wool, in particular of glass or of rock.

13. The product as claimed in claim 12, **characterized in that** the fibers are composed of a glass which comprises the constituents below in the following proportions, expressed as percentages by weight:
| | |
|---|---|
| SiO₂ | 39-55%, preferably 40-52% |
| Al₂O₃ | 16-27%, preferably 16-25% |
| CaO | 3-35%, preferably 10-25% |
| MgO | 0-15%, preferably 0-10% |
| Na₂O | 0-15%, preferably 6-12% |
| K₂O | 0-15%, preferably 3-12% |
| R₂O (Na₂O + K₂O) | 10-17%, preferably 12-17% |
| P₂O₅ | 0-3%, preferably 0-2% |
| Fe₂O₃ | 0-15% |
| B₂O₃ | 0-8%, preferably 0-4% |
| TiO₂ | 0-3%, |
the MgO content being between 0 and 5% when the R₂O content is less than or equal to 13.0%.

14. The product as claimed in claim 13, **characterized in that** the glass comprises the constituents below in the following proportions (as % by weight):
| | |
|---|---|
| SiO₂ | 39-44%, preferably 40-43% |
| Al₂O₃ | 16-27%, preferably 16-26% |
| CaO | 6-20%, preferably 8-18% |
| MgO | 1-5%, preferably 1-4.9% |
| Na₂O | 0-15%, preferably 2-12% |
| K₂O | 0-15%, preferably 2-12% |
| R₂O (Na₂O + K₂O) | 10-14.7%, preferably 10-13.5% |
| P₂O₅ | 0-3%, in particular 0-2% |
| Fe₂O₃ | 1.5-15%, in particular 3.2-8% |
| B₂O₃ | 0-2%, preferably 0-1% |
| TiO₂ | 0-2%, preferably 0.4-1%. |

15. A process for the manufacture of an acoustic and/or a thermal insulating product as claimed in one of claims 12 to 14, according to which the mineral wool is manufactured, a sizing composition is applied to said wool and said wool is treated at a temperature which makes possible the crosslinking of the size and the formation of an infusible binder, **characterized in that** use is made of the sizing composition as claimed in one of claims 1 to 10.
